# EUROPEAN PATENT APPLICATION

(11) **EP 1 279 780 A2**
(43) Date of publication of application: **29.01.2003**
(21) Application number: 02255178.2
(22) Date of filing: 24.07.2002
(51) Int. Cl.: E04G 21/16

(54) **Handling device**

(30) Priority: 24.07.2001 GB 0117945
(71) Applicant: Wallace, Campbell Thomas, Netherlee, Glasgow G44 3QX (GB)
(72) Inventor: Wallace, Campbell Thomas, Netherlee, Glasgow G44 3QX (GB)
(74) Representative: Pattullo, Norman

(57) **Abstract**

Device for handling objects which are awkward to lift or carry which is particularly, but not exclusively, applicable to handling building products such as paving slabs (24) and building blocks.

The device comprises at least two arms (10) extending in either direction from an intermediate axis, a handle (20) connected with the arms (10) and located centrally of the device, the arms sloping downwardly with respect to the handle (20) and forming a shallow angle between them when the device is held by the handle (20). Each arm (10) is provided at its outer end with gripping means (14) effective in a direction inwardly of said outer end, and the arms (10) being capable of spreading movement with respect to said axis to engage the gripping means (14) over the sides of an object to be handled.

## Description

This invention relates to a device for handling objects which are awkward to lift or carry. The invention is particularly, but not exclusively, applicable to handling building products such as paving slabs and building blocks.

Paving slabs, for example, are awkward for one person to lift and move, and it is particularly difficult to remove one slab from an area of paving. A considerable number of devices have been proposed in the prior art for simplifying the handling of products of this nature, but none of these to date has provided a suitable combination of ease of use, safety, robustness, ease of manufacture and low cost, especially in the context of use by amateurs.

The present invention provides a handling device for use in lifting and transporting an object, the device comprising at least two arms extending in either direction from an intermediate axis, a handle connected with the arms and located centrally of the device, the arms sloping downwardly with respect to the handle and forming a shallow angle between them when the device is held by the handle, each arm being provided at its outer end with gripping means effective in a direction inwardly of said outer end, and the arms being capable of spreading movement with respect to said axis to engage the gripping means over the sides of an object to be handled. By shallow it will be understood that the angle between the arms resides in the general range of 120° to 180° (the latter being the condition of the two arms being parallel to each other).

The arms may be made of a resilient material such that the spreading movement is produced by flexing of the arms. Preferably, however, the arms are pivoted at said axis.

Preferably, there are at least three arms, two to one side and one to the other side of said axis.

The axis may be located off centre and the handle formed by a portion of a longer arm.

Preferably, however, the axis is central. The arms may be pivoted on a rod which forms or mounts the handle. Alternatively, the handle may be spaced, for example by a pair of bars, above the axis such that in use the user's hand is spaced away from the object being handled. The spaced distance is preferably greater than the length of the arms, thus allowing the arms to fold into the spaced distance.

Where the arms are pivoted, the device preferably includes stop means limiting the pivotal movement of the arms in the downward direction. A particularly preferred feature of the invention resides in the handle being rigidly connected with the stop means whereby pivotal movement of the handle relative to an object engaged by the device produces disengagement of the gripping means at one side.

Preferably at least one arm further includes adjustment means to allow selectable variation in the effective length of each arm between the axis and said arm's respective gripping means.

From another aspect, the present invention provides a handling device for use in lifting and transporting an object, the device comprising a pivot, at least two arms pivoted on and extending to one side of the pivot, at least one arm pivoted on and extending to the other side of the pivot, each of the arms having at its outer end gripping means extending downwardly from the arm, a handle rigidly connected with the pivot to be located, in use, at or above the pivot, and stop means at the pivot limiting downward movement of the arms about the pivot to a shallow angle therebetween.

Embodiments of the invention will now be described, by way of example only, with reference to the drawings, in which:
Figure 1 is an isometric view of one form of handling device in accordance with the invention, in a condition ready for use;
Figure 2 shows the handling device of Figure 1 in a folded condition for storage;
Figure 3 is a side view of the device of Figure 1 being applied to a paving slab;
Figure 4 shows the device engaging the paving slab for lifting;
Figure 5 shows the device being disengaged from the slab;
Figure 6 shows the device of Figures 1 and 2 being used to lift a narrow article;
Figures 7 and 8 are views similar to Figures 1 and 2 showing another embodiment of the handling device;
Figures 9 to 12, 14 and 15 are isometric views illustrating further embodiments and modifications;
Figures 13a and 13b are an elevation and plan, respectively, of a further embodiment in use;
Figure 16 is an isometric view of a further embodiment of a handling device according to the present invention;
Figure 17 is a sectional plan view of the detail of the pin pivoting mechanism of the handling device of Figure 16;
Figure 18 is an isometric view of the claws of the handling device of Figure 16; and
Figure 19 is an isometric view of a modification of the claws of the handling devices of Figures 1 and 16.

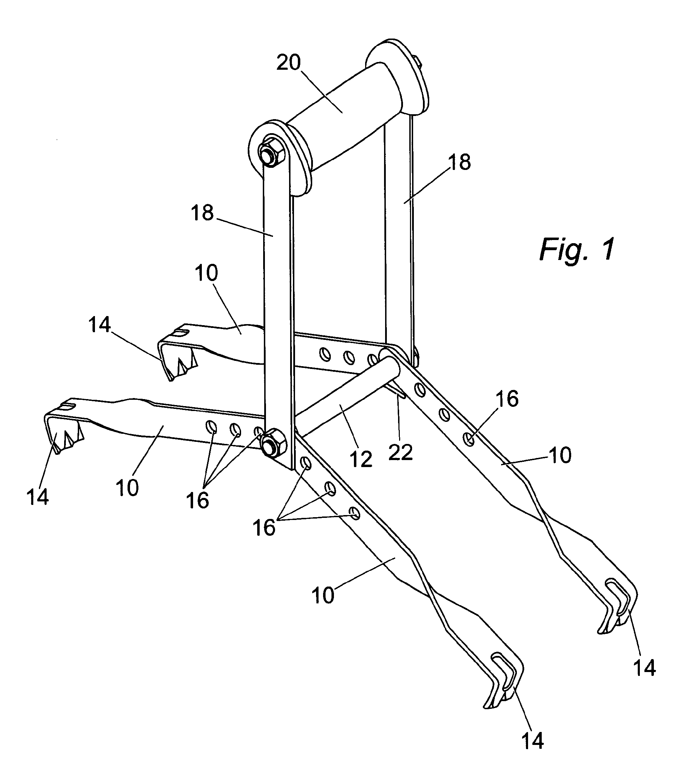

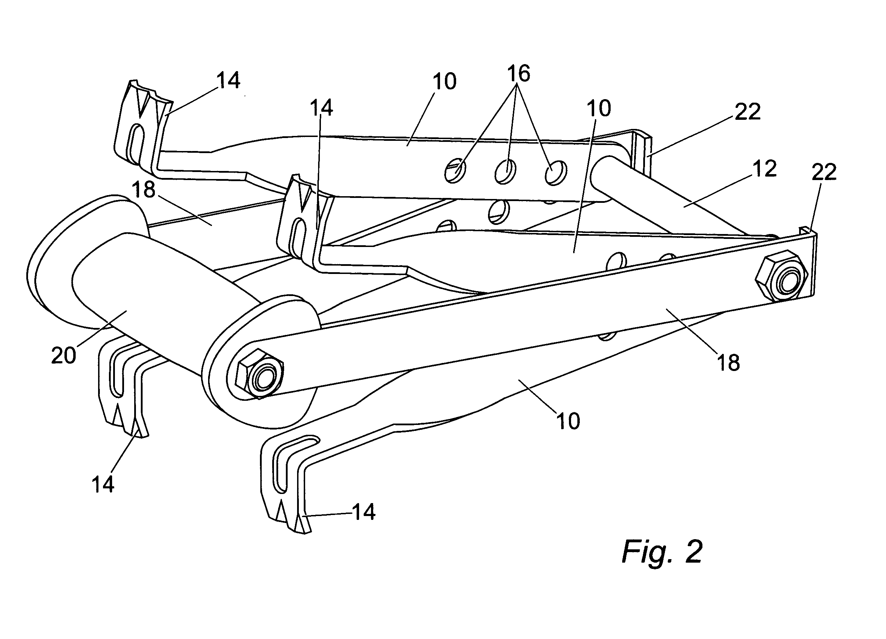

Referring to Figures 1 and 2, a handling device comprises four arms 10 pivoted on a central rod 12. Each arm 10 has an outer end formed into a claw 14, and is provided adjacent its inner end with a series of holes 16 which allow the effective length of the arm 10 to be varied.

Also pivoted to the rod 10 are two extension bars 18 which have a handle 20 secured across their outer ends. As best seen in Figure 2, the inner ends of the extension bars 18 are turned in to form stops 22.

Typically, the rod 10 is steel, the arms 12 and bars 18 are formed from steel bar, and the handle 20 is a plastics moulding.

Figure 1 shows an unfolded, ready for use, condition in which the arms 10 hang under gravity to positions limited by the stops 22. Figure 2 shows a folded, storage, condition in which the arms 10 are folded up adjacent the bars 18.

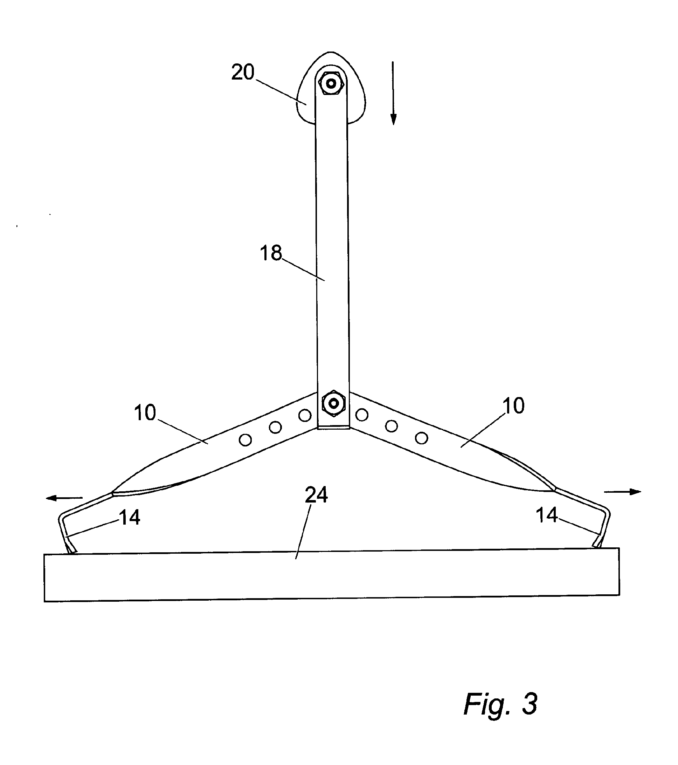

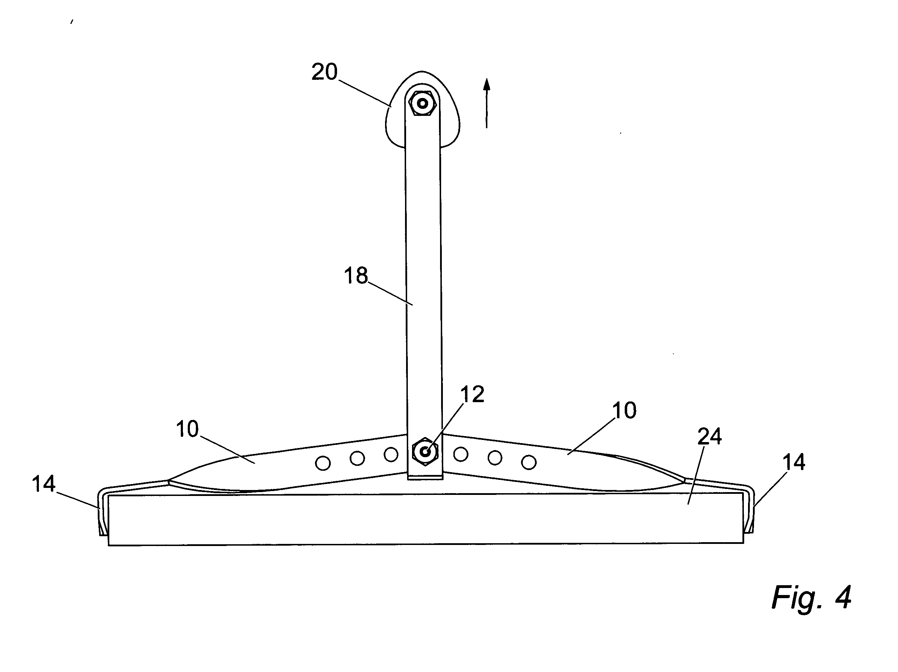

Figures 3 - 5 show the device in use with a paving slab 24. The device is applied to the slab 24 simply by holding the handle 20 and lowering the device onto the slab 24 (Figure 3). The arms 10 spread until the claws 14 engage over the edges of the slab 24 (Figure 4), at which point the slab can be lifted by pulling up on the handle. This mode of operation is useful for general handling, but is particularly advantageous when removing a slab from an area of paving.

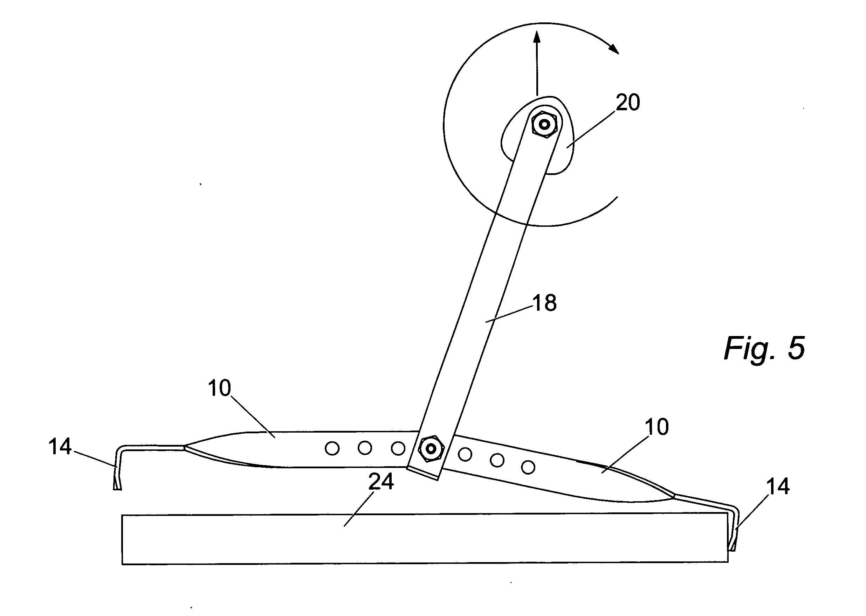

When the slab 24 has been deposited at a desired. location, the device can be disengaged as shown in Figure 5 simply by rotating the handle 20 with respect to the rod 12. Owing to the presence of the stops 22, this tilting action raises one pair of arms 10 to disengage their claws 14 as seen in Figure 5, following which the device can be lifted from the slab 24.

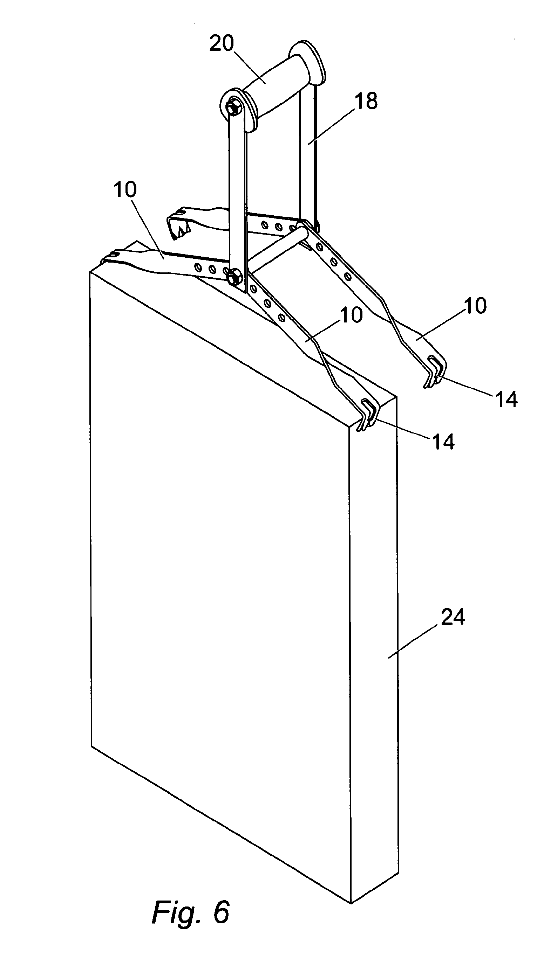

The device can be used in exactly the same way to handle a building block, with the claws 14 engaging over opposed top edges of the block. Also, as seen in Figure 6, the device can be used to lift and handle a narrow article, such as the paving slab 24 positioned vertically, by making use of only two of the arms 10.

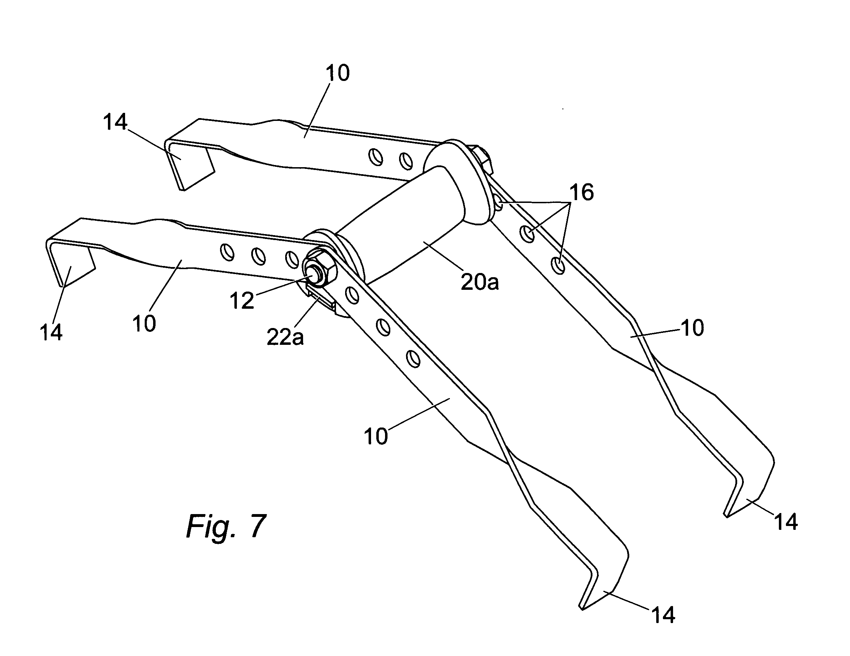

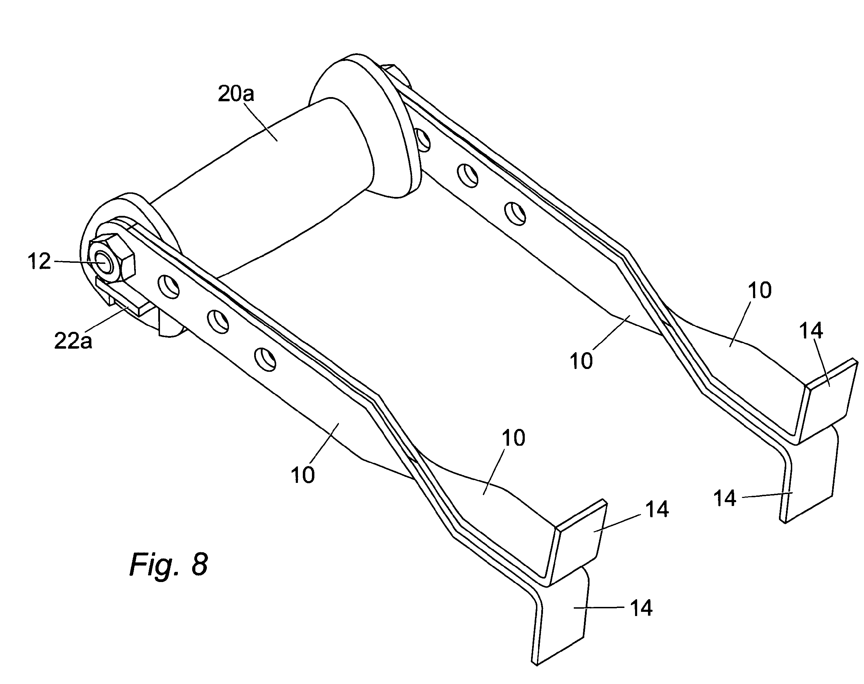

Figures 7 and 8 show a modified form of handling device, in which a handle 20a is fitted around the pivot rod 12, stops 22a being provided as projections from the handle 20a. This embodiment functions as above and has the benefit of simplicity and compactness, but the embodiment of Figures 1 and 2 will normally be preferred as it reduces the need to stoop.

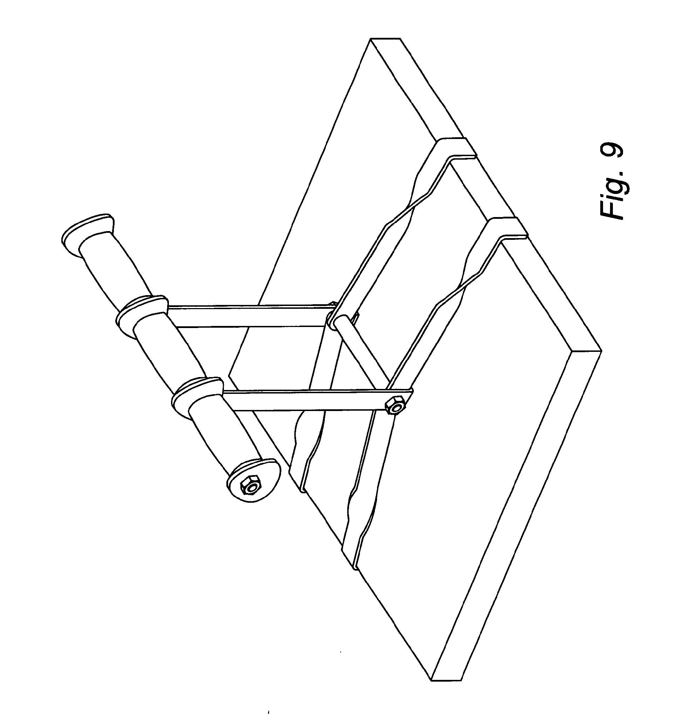

Figures 9 to 15 illustrate modified embodiments of the invention. Since the construction and operation of these will be readily understood from the foregoing, only brief descriptions will be given.

Figure 9 shows a handling device similar to Figures 1 and 2 but with the handle extended for use by both hands.

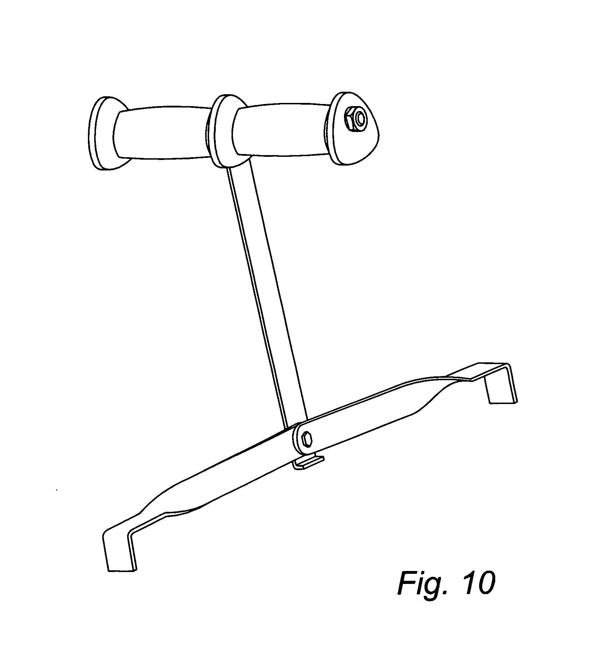

Figure 10 shows a version with only two arms and claws. This embodiment can be used in pairs, one per user, to allow lifting of heavier and/or larger slabs. The handle may be adapted for one-handed or two-handed grip.

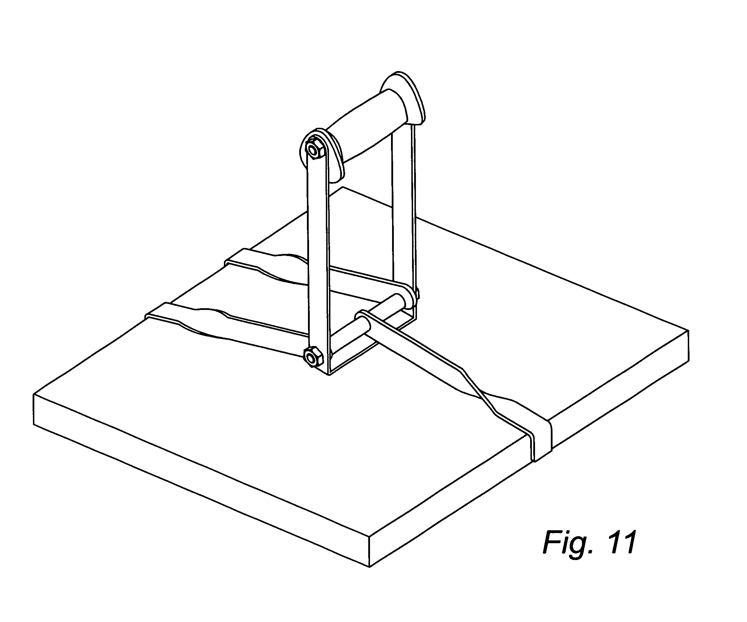

The embodiment of Figure 11 has three arms. This is inherently the most stable version, and will cope well where there is significant irregularity in the articles being lifted.

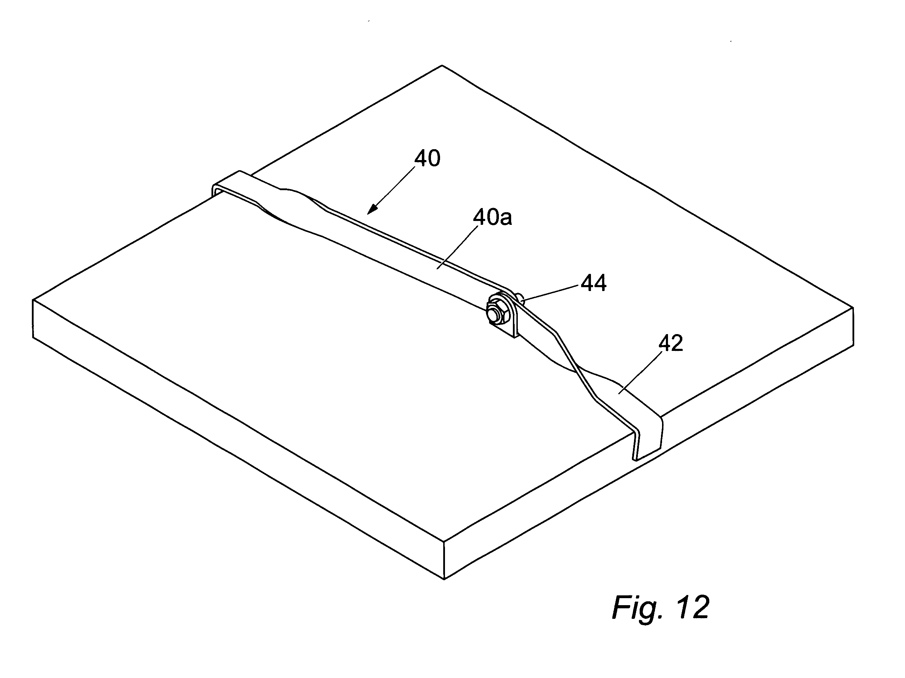

Figure 12 shows a version in which a single pair of arms 40 and 42 are pivoted together by a bolt 44 at a location offset from the centre of the device. A portion 40a of the longer arm 40 acts as a handle which is located at the centre of the device and thus above the centre of gravity of the article being lifted.

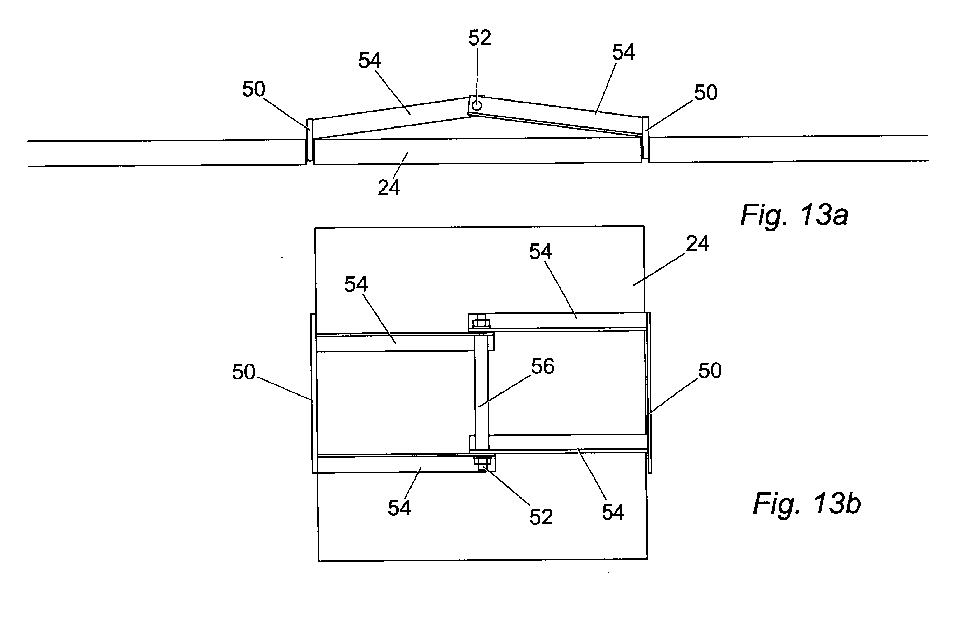

In Figure 13, the slab 24 is gripped by plates 50 which are pivoted to a rod 52 by pairs of arms 54. The rod 52 is surrounded by a tube 56 which acts as a spacer and a handle. This embodiment can be somewhat unstable if there is not accurate parallelism of the plates 50 and the sides of the slab 24.

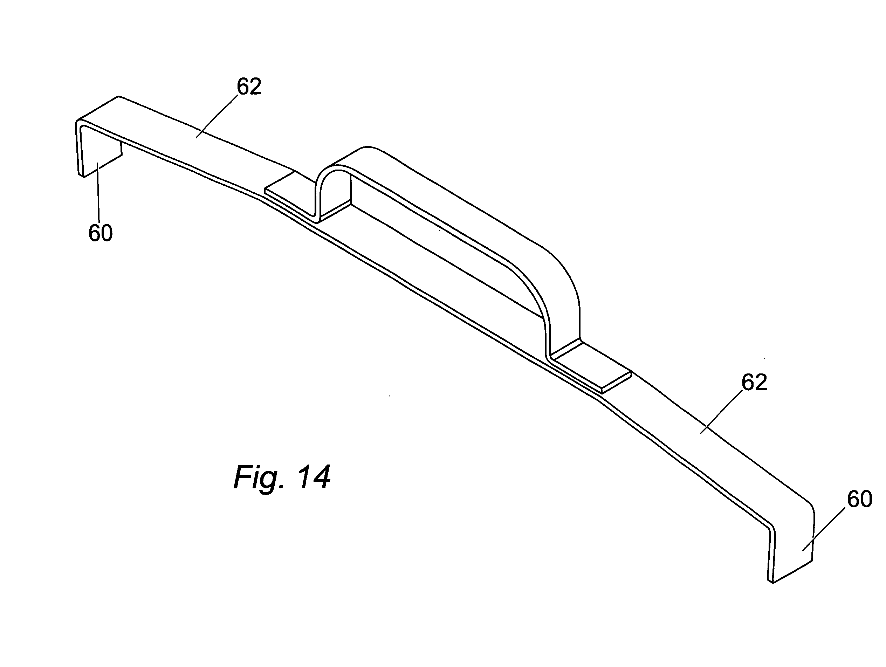

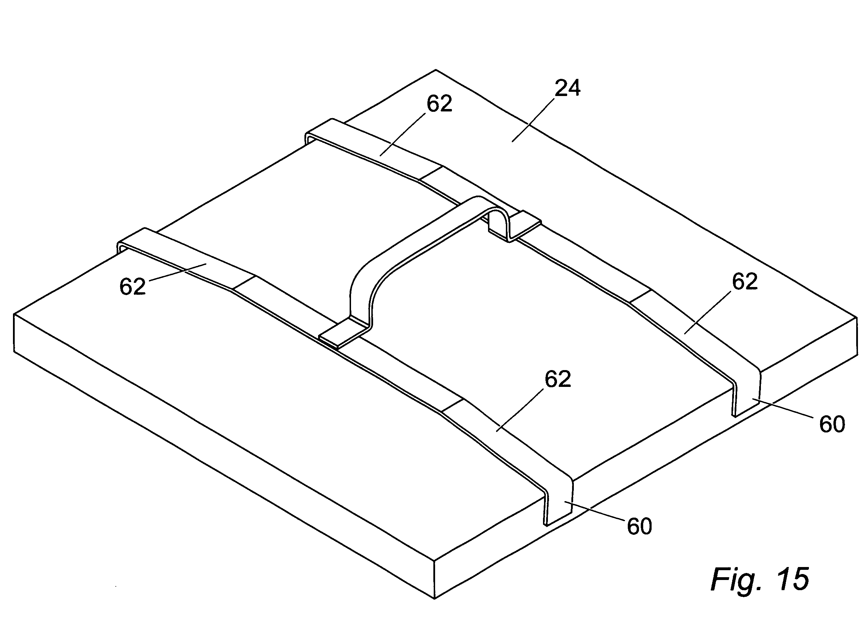

The embodiments of Figures 14 and 15 operate on similar principles to the above, but make use of gripping claws 60 formed on the ends of resilient strips 62 which can flex and snap into place, dispensing with the use of pivoting connections.

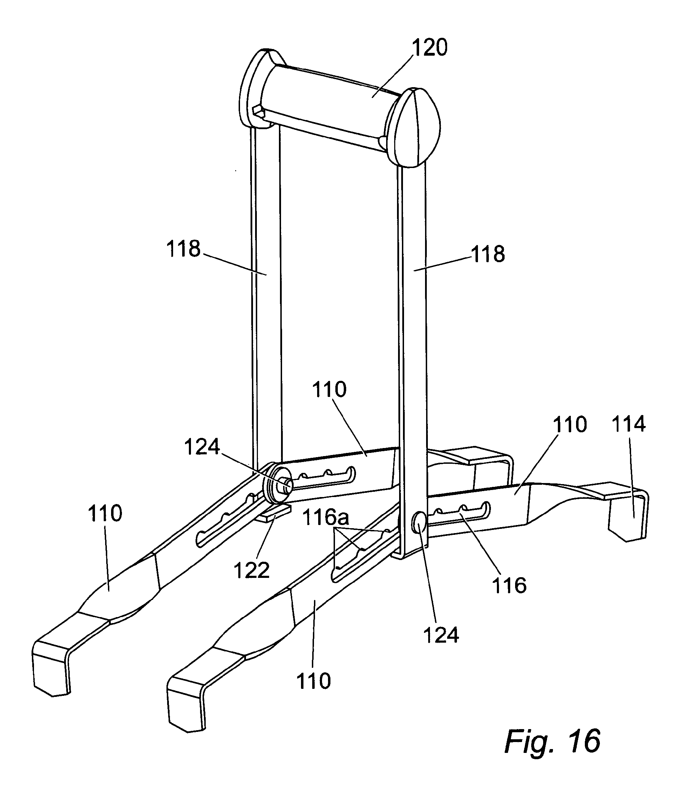

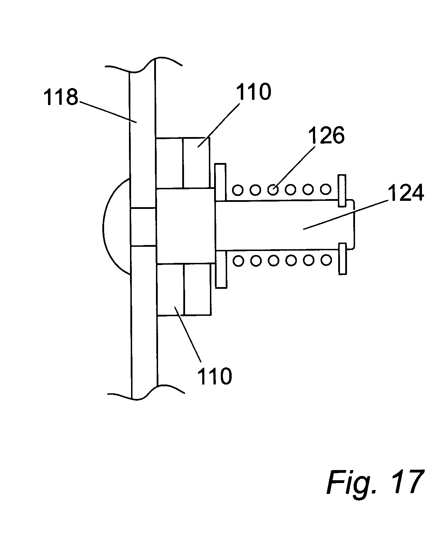

Figure 16 shows a further modified embodiment of the invention. The device is largely similar to that shown in Figures 1 to 6 and described above with some modifications. The embodiment of Figure 16 does not include a central bar around which the arms 110 pivot, but rather two pins 124 are provided. Secondly, instead of holes to allow the effective length of the arms to be varied, this embodiment includes a ratchet-like mechanism on each arm 110.
The mechanism comprises a shaped slot 116 which cooperates with the pins 124. The slots 116 are shaped as elongate cut-outs with several arcuate formations 116a extending from their upper edges.
The pins 124 have two distinct diameters along their length and a coil spring 126 which biases the larger diameter section between the arms 110. The larger diameter sections have a co-operable diameter with the sections of the slots 116 containing the arcuate formations 116a. They lock the arms at a certain effective length while still allowing the arms to pivot. To alter the effective length of the arms, the user forces the arms away from the bars 118 overcoming the biasing action of the spring and placing the smaller diameter section of the pin within the slot. In this condition, the effective length of the arms can be varied since the smaller diameter section of the pin will allow free movement of the arms along the entire length of the slots. The user can select which effective length of arm is required and reengage the pin into the appropriate arcuate formation 116a. Details of the pin and spring mechanism are shown in Figure 17.

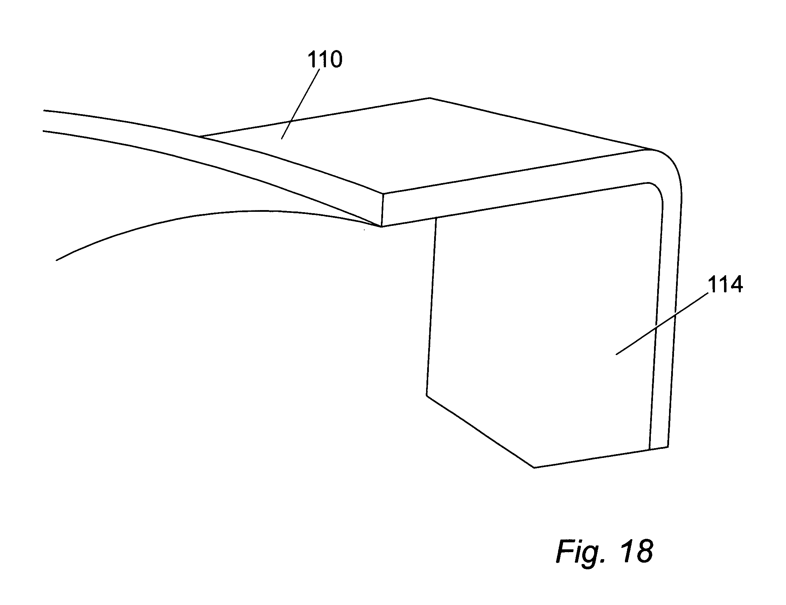

Furthermore, the embodiment of Figure 16 has an alternative shape of claw 114. In this particular embodiment the claw 114 terminates at its outer end at a point, the claw reducing in width in a linear manner to form a substantially chevron like formation. Detail of the chevron claw 114 is shown in Figure 18.

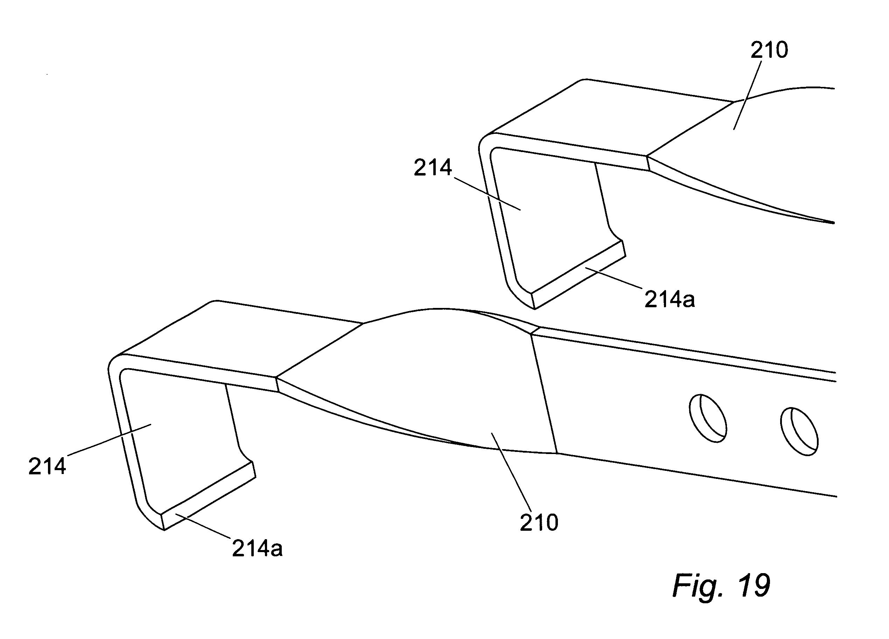

In Figure 19 a further claw modification is shown.
In this case the claw 214 includes a return portion 214a. The return portion 214a may engage the lower surface of a paving slab to be lifted (not shown) or may also provide a line contact with the slab's edge.

It will be understood to the man skilled in the art that the various modifications described above are not mutually exclusive to each embodiment but are interchangeable on further embodiments without departing from the scope of the present invention.

The various embodiments of the present invention are of particular utility with domestic paving slabs.as typically sold for D-I-Y use, for example 450mm x 450mm x 35mm thick. The devices of the present invention not only allow such a slab to be readily lifted and transported with one hand, but also facilitate the careful positioning and removal of the slabs without disturbing neighbouring slabs or the bed on which they are being laid. For a product of this size, it is suitable for the movement of the arms from the stops to their fully extended position to cover a range of 4 - 8 inches, preferably 5 - 6 inches.

In all the embodiments described, the engagement between the device and the slab or other product is frictional. It is preferred for the contact to be essentially a line contact, since an area contact cannot be consistently reproduced. The frictional force is increased by reducing the angle which the arms make to the horizontal when engaged. Reducing this angle excessively, however, will increase the bending forces on the components which will then need to be stronger than is necessary. The friction between steel and concrete is sufficient for a satisfactory design to be economically realised, but if necessary a higher friction material could be introduced, such as rubber pads.

Other modifications and improvements may be made to the foregoing embodiments within the scope of the present invention.

## Claims

1. A handling device for use in lifting and transporting an object, the device comprising at least two arms extending in either direction from an intermediate axis, a handle connected with the arms and located centrally of the device, the arms sloping downwardly with respect to the handle and forming a shallow angle between them when the device is held by the handle, each arm being provided at its outer end with gripping means effective in a direction inwardly of said outer end, and the arms being capable of spreading movement with respect to said axis to engage the gripping means over the sides of an object to be handled.

2. A handling device for use in lifting and transporting an object according to Claim 1 wherein the arms are made of a resilient material.

3. A handling device for use in lifting and transporting an object according to any preceding claim wherein the arms are pivoted at said axis.

4. A handling device for use in lifting and transporting an object according to any preceding claim wherein there are at least three arms, two to one side and one to the other side of said axis.

5. A handling device for use in lifting and transporting an object according to any preceding claim wherein the axis is central.

6. A handling device for use in lifting and transporting an object according to any preceding claim wherein the handle is spaced above the axis.

7. A handling device for use in lifting and transporting an object according to Claim 6 wherein the spaced distance is greater than the length of the arms.

8. A handling device for use in lifting and transporting an object according to Claims 3 to 7 further including stop means limiting the pivotal movement of the arms in the downward direction.

9. A handling device for use in lifting and transporting an object according to Claim 8 wherein the handle is rigidly connected with the stop means whereby pivotal movement of the handle relative to an object engaged by the device produces disengagement of the gripping means at one side.

10. A handling device for use in lifting and transporting an object according to any preceding claim wherein at least one arm further includes adjustment means to allow selectable variation in the effective length of each arm between the axis and said arm's respective gripping means.

11. A handling device for use in lifting and transporting an object, the device comprising a pivot, at least two arms pivoted on and extending to one side of the pivot, at least one arm pivoted on and extending to the other side of the pivot, each of the arms having at its outer end gripping means extending downwardly from the arm, a handle rigidly connected with the pivot to be located, in use, at or above the pivot, and stop means at the pivot limiting downward movement of the arms about the pivot to a shallow angle therebetween.
